(19) Europäisches Patentamt
European Patent Office
Office européen des brevets

(11) **EP 3 231 634 B1**

(12) **EUROPEAN PATENT SPECIFICATION**

(45) Date of publication and mention
of the grant of the patent:
**27.05.2020 Bulletin 2020/22**

(51) Int Cl.:
***B60C 9/00*** *(2006.01)*

(21) Application number: **17164750.6**

(22) Date of filing: **04.04.2017**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.04.2016 JP 2016080109**

(43) Date of publication of application:
**18.10.2017 Bulletin 2017/42**

(73) Proprietor: **Sumitomo Rubber Industries, Ltd.
Kobe-shi, Hyogo-ken (JP)**

(72) Inventor: **ITO, Tadashi
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 1 454 766          JP-A- H0 399 903
JP-A- S6 181 802          JP-A- H07 189 144
JP-A- H11 217 778          US-A1- 2007 144 642
US-A1- 2015 007 922**

**Description**

BACKGROUND OF THE INVENTION

Field of the Invention

The present invention relates to pneumatic tires. More particularly, the present invention relates to heavy duty pneumatic tires which are mounted onto vehicles such as trucks, buses, and the like.

Description of the Related Art

There is a demand for reducing the weight of tires in order to improve vehicle fuel efficiency. The same is true of heavy duty tires which are mounted onto vehicles such as trucks, buses, and the like.

Reduction in the weight of a tire affects the strength of the tire. Reduction in the strength of a tire affects the performance of the tire. Therefore, reduction in the weight of a tire is attempted while maintaining the strength.

The aspect ratio of a heavy duty tire is becoming lower in order to increase transportation efficiency. As the aspect ratio of a tire is decreased, the profile of the carcass ply, i.e. the carcass line, is changed from a round shape to an elliptical shape.

A belt is layered over a carcass in a portion radially inward of a tread. The aforementioned change in the shape of the carcass line leads to increase of load on the belt. The increase of load activates the movement of the belt.

The belt includes multiple cords aligned with each other, and a topping rubber. In a tire having a low aspect ratio, the movement of the belt is great. Therefore, in such a belt, energy loss is increased in the topping rubber. The increase in energy loss may cause reduction in fuel efficiency.

As described above, the belt is layered over the carcass in a portion radially inward of the tread. The belt plays an important role in maintaining the strength of the tread. A variety of studies have been made to improve the belt. An example of the study is disclosed in JP03-096404 (hereinafter, referred to as Patent Literature 1) .

In the tire disclosed in Patent Literature 1, the belt includes a cord (also referred to as "open twisted cord") obtained by a plurality of wires being twisted so as to be spaced from each other, instead of a cord (also referred to as "compact twisted cord") obtained by a plurality of wires being twisted so as to be in contact with each other.

The belt includes a topping rubber. The volume of the topping rubber affects the rolling resistance of a tire.

The outer diameter of the cord included in the belt affects the thickness of the belt. In order to reduce the volume of the topping rubber, a cord having a reduced number of wires and therefore having a smaller diameter may be used. However, a narrower cord affects the strength of the belt. When the strength of the belt is low, the cut/concussion resistance of the tire may be impaired.

An object of the present invention is to provide a pneumatic tire which allows a reduced rolling resistance to be achieved without impairing the cut/concussion resistance.

JP S61-081802 discloses a pneumatic tire in accordance with the preamble of claim 1.

JP H07-189144 and JP HII-217778 each disclose a steel cord for reinforcing the rubber components of a pneumatic tire, wherein the steel cord comprises four filaments that are arranged to form an elliptical cross-section.

SUMMARY OF THE INVENTION

A pneumatic tire according to the present invention includes a tread and a belt. The belt is disposed radially inward of the tread. The belt includes a plurality of belt plies layered in a radial direction. Each of the belt plies includes multiple steel belt cords and a topping rubber. The belt cords are covered by the topping rubber. Each of the belt cords includes a twisted string obtained by twisting together four filaments. The belt cord has an elliptical cross-section. On the elliptical cross-section, a minor axis of the cross-section extends in a thickness direction of the belt ply. A ratio of a length of the minor axis to a length of a major axis of the cross-section is greater than or equal to 0.67 and not greater than 0.94. The four filaments are a first filament, a second filament, a third filament, and a fourth filament arranged in clockwise order, respectively. The first filament and the third filament are disposed along the minor axis. The first filament is in contact with the second filament or the fourth filament, the third filament is in contact with the second filament or the fourth filament,-the first filament and the third filament are each in contact with the second filament and the fourth filament, or the first filament is in contact with the third filament. A thickness of the topping rubber that corresponds to a length from an outer surface of the belt ply to an outer surface of the belt cord along the minor axis of the belt cord is greater than or equal to 0.20 mm and not greater than 0.30 mm, and a thickness of each belt ply is greater than or equal to 1.30 mm and not greater than 1.55 mm. An outer diameter of each filament is greater than or equal to 0.41 mm and not greater than 0.43 mm.

In the pneumatic tire, the topping rubber preferably has a breaking energy of higher than or equal to 4000 MPa ·% and not higher than 7000 MPa ·%.

In the pneumatic tire, a ratio of a width of the belt to a width of the tread is preferably greater than or equal to 0.75 and not greater than 0.95.

In the pneumatic tire according to the present invention, reduction in the rolling resistance is achieved without impairing the cut/concussion resistance. In other words, according to the present invention, a pneumatic tire which allows a reduced rolling resistance to be achieved is obtained without impairing the cut/concussion resistance.

BRIEF DESCRIPTION OF THE DRAWINGS

FIG. 1 is a cross-sectional view showing a portion of a pneumatic tire according to an embodiment of the present invention;
FIG. 2 is an enlarged cross-sectional view showing a portion of a belt of the tire in FIG. 1; and
FIG. 3 is cross-sectional views showing belt cords in the belt.

DESCRIPTION OF THE PREFERRED EMBODIMENTS

The following will describe in detail the present invention based on preferred embodiments with reference to the accompanying drawings.

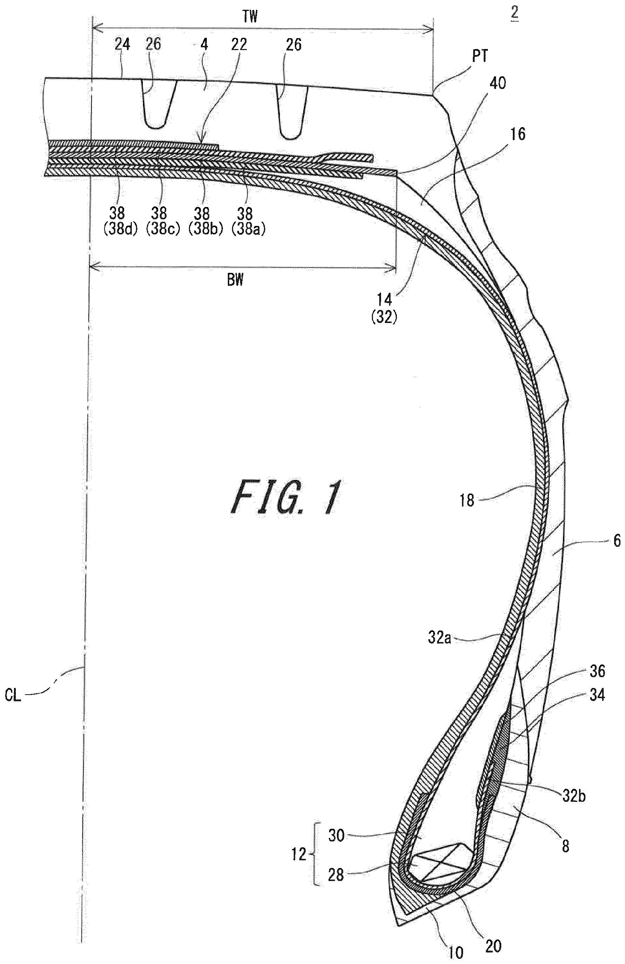

FIG. 1 shows a pneumatic tire 2. Specifically, FIG. 1 shows a portion of a cross-section of the tire 2 taken along a plane including the center axis of rotation of the tire 2. In FIG. 1, the up-down direction corresponds to the radial direction of the tire 2, the right-left direction corresponds to the axial direction of the tire 2, and the direction perpendicular to the drawing sheet corresponds to the circumferential direction of the tire 2. In FIG. 1, an alternate long and short dash line CL indicates the equator plane of the tire 2. The shape of the tire 2 is symmetric about the equator plane, except for the tread pattern.

The tire 2 includes a tread 4, a pair of sidewalls 6, a pair of clinches 8, a pair of chafers 10, a pair of beads 12, a carcass 14, a pair of cushion layers 16, an inner liner 18, a pair of fillers 20, and a belt 22. The tire 2 is of the tubeless type. The tire 2 is mounted onto a truck, bus, or the like. The tire 2 is a heavy duty tire.

The tread 4 has a shape which is convex outward in the radial direction. The tread 4 has a tread surface 24 which comes into contact with the road surface. In the tread 4, grooves 26 are formed. A tread pattern is formed by the grooves 26. The tread 4 is made of a crosslinked rubber. For the tread 4, wear resistance, heat resistance, and grip performance are taken into consideration. In FIG. 1, a reference character PT indicates an end of the tread surface 24.

Each sidewall 6 extends almost inward from the end of the tread 4 in the radial direction. The sidewall 6 is disposed axially outward of the carcass 14. The sidewall 6 is made of a crosslinked rubber which is excellent in cut resistance and weather resistance. The sidewall 6 prevents damage to the carcass 14.

Each clinch 8 is disposed almost inward of the sidewall 6 in the radial direction. The clinch 8 is disposed axially outward of the bead 12 and the carcass 14. The clinch 8 is made of a crosslinked rubber which is excellent in wear resistance. The clinch 8 comes into contact with a flange of a rim, although not shown.

Each chafer 10 is disposed in the vicinity of the bead 12. In the tire 2, the chafer 10 extends almost inward from an end of the clinch 8 in the axial direction. The chafer 10 is formed integrally with the clinch 8. The chafer 10 is made of the same material as that of the clinch 8.

Each bead 12 is disposed axially inward of the clinch 8. As described above, the clinch 8 is disposed almost inward of the sidewall 6 in the radial direction. The bead 12 is disposed radially inward of the sidewall 6. The bead 12 includes a core 28 and an apex 30.

The core 28 extends in the circumferential direction. The core 28 is ring-shaped, and includes a wound non-stretchable wire. A typical material for the wire is steel.

The apex 30 extends radially outward from the core 28. As can be seen from FIG. 1, the apex 30 is tapered radially outward. The apex 30 is made of a crosslinked rubber which has high hardness.

The carcass 14 includes a carcass ply 32. In the tire 2, the carcass 14 includes a single carcass ply 32. The carcass 14 may include two or more carcass plies 32.

In the tire 2, the carcass ply 32 is extended on and between the beads 12 on both sides, along inner sides of the tread 4, the sidewalls 6, and the clinches 8. The carcass ply 32 is turned up around each core 28 from the inner side toward the outer side in the axial direction. By the turning-up, the carcass ply 32 has a main portion 32a and a pair of turned-up portions 32b formed therein. The carcass ply 32 includes the main portion 32a and the pair of turned-up portions 32b.

Although not shown, the carcass ply 32 includes multiple cords aligned with each other, and a topping rubber. The absolute value of an angle of each cord relative to the equator plane is 75° to 90°. In other words, the carcass 14 has a radial structure. A material for the cord is steel. The carcass ply 32 includes multiple steel cords.

In the tire 2, an end of the turned-up portion 32b is disposed between an outer end of the apex 30 and the core 28 in the radial direction. As described above, the tire 2 is mounted onto a truck, bus, or the like. A heavy load acts on the bead 12 portion of the tire 2. Distortion tends to concentrate on the end of the turned-up portion 32b. In the tire 2, the bead 12 portion further includes a middle layer 34 and a strip 36. These elements inhibit concentration of distortion on the end of the turned-up portion 32b.

Each cushion layer 16 is layered over the carcass 14 in the vicinity of an end of the belt 22. The cushion layer 16 is made of a soft crosslinked rubber. The cushion layer 16 absorbs stress on the end of the belt 22. The cushion layer 16 inhibits the belt 22 from being lifted.

The inner liner 18 is disposed inward of the carcass 14. The inner liner 18 is joined to an inner surface of the carcass 14 with an insulation (not shown) being interposed therebetween. The inner liner 18 is made of a crosslinked rubber which is excellent in airtightness. A typical base rubber for the inner liner 18 is isobutylene-isoprene-rubber or halogenated isobutylene-isoprene-rubber. The inner liner 18 maintains the internal pressure of the tire 2.

Each filler 20 is disposed close to the bead 12. The filler 20 and the carcass 14 are layered over each other. The filler 20 is turned up around the core 28 of the bead 12 in a portion radially inward of the carcass 14. The filler 20 includes multiple cords aligned with each other, and a topping rubber, although not shown. Each cord is inclined relative to the radial direction. The cord is made of steel. The filler 20 inhibits tilting of the bead 12 portion. The filler 20 contributes to durability of the tire 2.

The belt 22 is disposed radially inward of the tread 4. The belt 22 and the carcass 14 are layered over each other. The belt 22 reinforces the carcass 14. The belt 22 includes a plurality of belt plies 38 which are layered in the radial direction.

In the tire 2, the belt 22 includes a first belt ply 38a, a second belt ply 38b, a third belt ply 38c, and a fourth belt ply 38d. The first belt ply 38a forms a radially inner portion of the belt 22. The second belt ply 38b is layered radially outward of the first belt ply 38a. The third belt ply 38c is layered radially outward of the second belt ply 38b. The fourth belt ply 38d is layered radially outward of the third belt ply 38c.

In the tire 2, the belt 22 includes the first belt ply 38a, the second belt ply 38b, the third belt ply 38c, and the fourth belt ply 38d. In the tire 2, the belt 22 includes the four belt plies 38. The belt 22 may be formed from three belt plies 38, or from two belt plies 38.

As can be seen from FIG. 1, in the tire 2, the second belt ply 38b is the widest in the axial direction among the first belt ply 38a, the second belt ply 38b, the third belt ply 38c, and the fourth belt ply 38d included in the belt 22. In the tire 2, an end 40 of the axially widest belt ply 38, i.e. the second belt ply 38b, of a plurality of belt plies 38 included in the belt 22, is an end of the belt 22. In the tire 2, an axial width of the belt 22 is represented by the axial width of the second belt ply 38b.

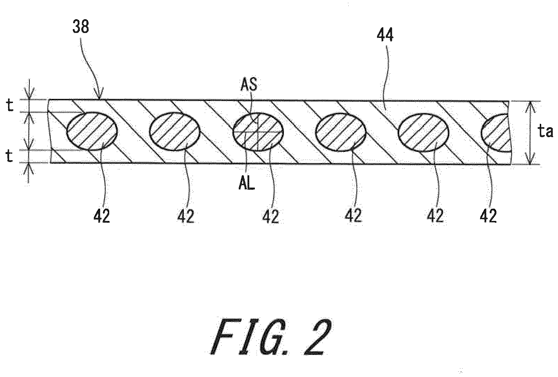

FIG. 2 shows a cross-section of one of the four belt plies 38 included in the belt 22 of the tire 2. In the drawing sheet of FIG. 2, the up-down direction corresponds to a thickness direction of the belt ply 38.

In the tire 2, the belt ply 38 includes multiple belt cords 42 aligned with each other, and a topping rubber 44. Specifically, the belt ply 38 includes multiple belt cords 42 aligned with each other, and a topping rubber 44. Similarly to this belt ply 38, the other three belt plies 38 each include multiple belt cords 42 aligned with each other, and a topping rubber 44. Specifically, the first belt ply 38a, the second belt ply 38b, the third belt ply 38c, and the fourth belt ply 38d each include the multiple belt cords 42 aligned with each other, and the topping rubber 44. The belt cords 42 are covered by the topping rubber 44. A material for the belt cords 42 is steel. The belt 22 includes steel cords. In the tire 2, the density of the belt cords 42 included in the belt ply 38 is set within the range of greater than or equal to 10 ends/5 cm and not greater than 40 ends/5 cm. The density of the belt cords 42 is preferably greater than or equal to 20 ends/5 cm and preferably not greater than 30 ends/5 cm. The cross-section of the belt ply 38 shown in FIG. 2 is taken by cutting the belt ply 38 along a plane perpendicular to the length direction of the belt cords 42. The density of the belt cords 42 is represented by the number of cross-sections of the belt cords 42 per 5 cm width in the cross-section of the belt ply 38 shown in FIG. 2.

In the tire 2, in each belt ply 38, the belt cords 42 are inclined relative to the equator plane. The absolute value of an angle of the belt cord 42 relative to the equator plane is 12° to 70°. In the tire 2, the inclination direction of the belt cord 42 in the second belt ply 38b relative to the equator plane is opposite to the inclination direction of the belt cord 42 in the first belt ply 38a relative to the equator plane. The inclination direction of the belt cord 42 in the third belt ply 38c relative to the equator plane is opposite to the inclination direction of the belt cord 42 in the second belt ply 38b relative to the equator plane. The inclination direction of the belt cord 42 in the fourth belt ply 38d relative to the equator plane is opposite to the inclination direction of the belt cord 42 in the third belt ply 38c relative to the equator plane.

As shown in FIG. 2, in the tire 2, the belt cord 42 has an elliptical cross-section. In the elliptical cross-section, a line segment AS is the shortest of line segments that form the outer diameter of the cross-section. In the present invention, the line segment AS is referred to as the "minor axis". In the elliptical cross-section, a line segment AL is the longest of line segments that form the outer diameter of the cross-section. In the present invention, the line segment AL is referred to as the "major axis".

In the tire 2, the minor axis AS of the cross-section of the belt cord 42 extends in the thickness direction of the belt ply 38. The major axis AL of the cross-section intersects the minor axis AS. In particular, in the tire 2, the major axis AL intersects the minor axis AS so as to be perpendicular to the minor axis AS. In the tire 2, it is preferable that the major axis AL is a perpendicular bisector of the minor axis AS, and the minor axis AS is a perpendicular bisector of the major axis AL. In the cross-section of the belt cord 42 shown in FIG. 2, the major axis AL is a perpendicular bisector of the minor axis AS, and the minor axis AS is a perpendicular bisector of the major axis AL.

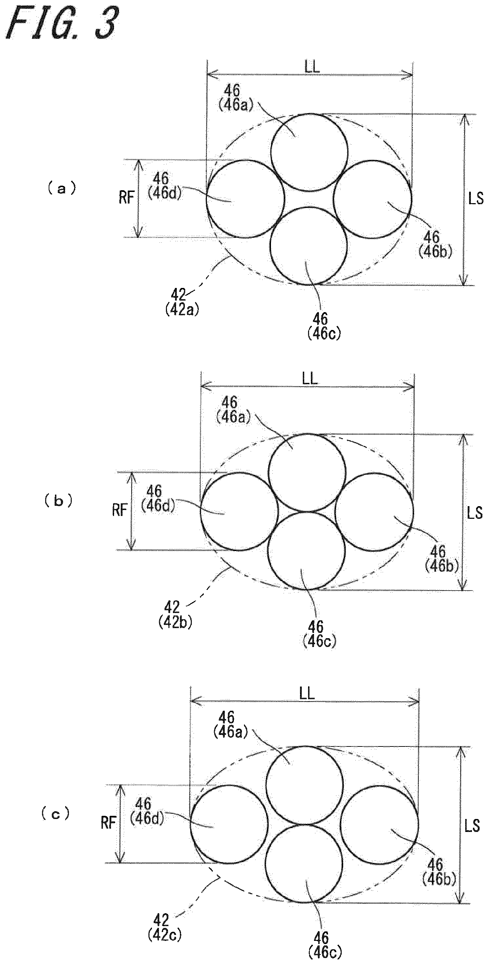

FIG. 3 shows a cross-section of the belt cord 42. In FIG. 3, the up-down direction corresponds to the thickness direction of the belt ply 38. The upper side in the drawing sheet corresponds to the radially outer side of the tire 2. The lower side in the drawing sheet corresponds to the radially inner side of the tire 2.

As can be seen from FIG. 3, in the tire 2, the belt cord 42 includes a twisted string obtained by twisting together four filaments 46. In the cross-section of the belt cord 42, the filament 46 disposed at the radially outer side is referred to as a first filament 46a. The other three filaments 46 are referred to as a "second filament 46b", a "third filament 46c" and a "fourth filament 46d", in the clockwise order from the filament 46 disposed to the right of the first filament 46a. In other words, in the cross-section of the belt cord 42, the four filaments 46, i.e. the first filament 46a, the second filament 46b, the third filament 46c, and the fourth filament 46d, are arranged in the clockwise order, respectively. Of these filaments 46, the first filament 46a and the third filament 46c are disposed along the minor axis AS of the cross-section. The second filament 46b and the fourth filament 46d are disposed along the major axis AL of the cross-section.

In FIG. 3, a double-headed arrow LL represents the length of the major axis AL of the cross-section of the belt cord 42. A double-headed arrow LS represents the length of the minor axis AS of the cross-section of the belt cord 42. A double-headed arrow RF represents the outer diameter of the filament 46.

As described above, in the tire 2, the cross-section of the belt cord 42 is elliptical. In addition, the ratio between the length of the major axis AL of the cross-section and the length of the minor axis AS thereof is appropriately adjusted. Specifically, the ratio of the length LS of the minor axis AS to the length LL of the major axis AL is less than or equal to 0.94. When the ratio is set to be less than or equal to 0.94, the belt cords 42 contribute to reduction in the volume of the topping rubber 44 in the belt 22. The belt 22 contributes to reduction in the rolling resistance. In this viewpoint, the ratio is preferably less than or equal to 0.91.

In the tire 2, the ratio of the length LS of the minor axis AS to the length LL of the major axis AL is not less than 0.67. When the ratio is set to be not less than 0.67, the belt cord 42 has an appropriate stiffness. In the tire 2, the strength of the belt 22 is appropriately maintained. The belt 22 contributes to the cut/concussion resistance of the tire 2. In this viewpoint, the ratio is preferably not less than 0.69.

In the tire 2, as shown in FIG. 3(a), in a cross-section of a belt cord 42a, the first filament 46a and the third filament 46c are each in contact with the second filament 46b and the fourth filament 46d.

FIG. 3(b) shows modification of the belt cord 42a shown in FIG. 3(a). Also in a belt cord 42b, the first filament 46a and the third filament 46c are each in contact with the second filament 46b and the fourth filament 46d. In addition, the first filament 46a is in contact with the third filament 46c.

FIG. 3(c) shows another modification of the belt cord 42a shown in FIG. 3(a). In a belt cord 42c, the first filament 46a and the third filament 46c are not in contact with the second filament 46b and the fourth filament 46d, unlike the belt cord 42a shown in FIG. 3(a). However, the first filament 46a is in contact with the third filament 46c, like the belt cord 42b shown in FIG. 3(b).

As described above, in the tire 2, in the elliptical cross-section of the belt cord 42, the four filaments 46 included in the belt cord 42, i.e. the first filament 46a, the second filament 46b, the third filament 46c, and the fourth filament 46d, are arranged in the clockwise order, respectively, and the first filament 46a and the third filament 46c are disposed along the minor axis AS. In addition, the first filament 46a is in contact with the second filament 46b or the fourth filament 46d, the third filament 46c is in contact with the second filament 46b or the fourth filament 46d, the first filament 46a and the third filament 46c are each in contact with the second filament 46b and the fourth filament 46d, or the first filament 46a is in contact with the third filament 46c. The belt cord 42 is more compact than a cord in which filaments 46 are not in contact with each other (open twisted cord). The contact between the filaments 46 contributes to the stiffness of the belt cord 42. The belt cord 42 prevents reduction in the strength of the belt 22. The tire 2 maintains good cut/concussion resistance. In the viewpoint of obtaining the belt 22 having a sufficient strength, the filaments 46 are preferably arranged in the cross-section of the belt cord 42 so that the first filament 46a and the third filament 46c are each in contact with the second filament 46b and the fourth filament 46d, or the first filament 46a is in contact with the third filament 46c, i.e. the arrangement of the filaments 46 shown in FIG. 3(a), the arrangement of the filaments 46 shown in FIG. 3(b), and the arrangement of the filaments 46 shown in FIG. 3(c) are preferable. In the tire 2, in the viewpoint of adjusting rolling resistance and cut/concussion resistance in a well-balanced manner, the arrangement of the filaments 46 shown in FIG. 3(a) and the arrangement of the filaments 46 shown in FIG. 3(b) are more preferable. The arrangement of the filaments 46 shown in FIG. 3(a) is particularly preferable.

As described above, reduction in the rolling resistance of the tire 2 can be achieved without impairing the cut/concussion resistance of the tire 2. In other words, according to the present invention, the pneumatic tire 2 which allows a reduced rolling resistance to be achieved is obtained without impairing the cut/concussion resistance.

As described above, in the tire 2, the belt ply 38 includes the topping rubber 44. The topping rubber 44 is obtained by a rubber composition being crosslinked. In other words, the topping rubber 44 is a crosslinked rubber.

In the tire 2, the topping rubber 44 of the belt ply 38 preferably has a breaking energy E of higher than or equal to 4000 MPa ·% and not higher than 7000 MPa ·%. When the breaking energy E is set to be higher than or equal to 4000 MPa ·%, the topping rubber 44 effectively contributes to the strength of the belt 22. The tire 2 maintains good cut/concussion resistance. In this viewpoint, the breaking energy E is more preferably higher than or equal to 4500 MPa ·%. When the breaking energy E is set to be not higher than 7000 MPa ·%, the energy loss due to the topping rubber 44 can be effectively inhibited. The tire 2 can have improved cut/concussion resistance while maintaining appropriate rolling resistance. In this viewpoint, the breaking energy E is more preferably not higher than 6500 MPa ·%.

In the present invention, the breaking energy E[MPa ·%] is calculated by:

$$E = TS \times EB/2$$

where TS represents a tensile strength[MPa], and EB represents an elongation at break[%].

The tensile strength TS and the elongation at break EB are measured in compliance with the standard of "JIS-K6251". The conditions are as follows. The measurement is conducted using a test piece which is obtained by crosslinking a rubber composition of the topping rubber 44. The test piece is obtained by keeping the rubber composition in a mold at a temperature of 160°C for 10 minutes.

Shape of test piece: No. 3 dumbbell

Ambient temperature: 23°C

Testing machine: Trade name "Strograph," manufactured by Toyo Seiki Seisaku-sho, Ltd.

Tensile speed: 500 mm/min

In FIG. 1, a double-headed arrow TW indicates an axial length from the equator plane to an end PT of the tread surface 24. The length TW corresponds to half the axial width of the tread surface 24. A double-headed arrow BW indicates an axial length from the equator plane to the end 40 of the belt 22. The length BW corresponds to half the axial width of the belt 22.

In the tire 2, the ratio of the length BW to the length TW, i.e. the ratio of the width of the belt 22 to the width of the tread surface 24, is preferably greater than or equal to 0.75 and preferably not greater than 0.95. When the ratio is set to be greater than or equal to 0.75, the volume of the rubber at the end PT portion of the tread 4 is appropriately maintained, and the effect of reinforcement by the belt 22 is sufficiently assured. The energy loss at this portion can be effectively inhibited, and therefore, the rolling resistance of the tire 2 is appropriately maintained. In this viewpoint, the ratio is more preferably greater than or equal to 0.78. When the ratio is set to be not greater than 0.95, the movement of the belt 22 at the end 40 can be effectively inhibited. Also in this case, the energy loss is effectively inhibited, and therefore, the rolling resistance of the tire 2 is appropriately maintained. In this viewpoint, the ratio is more preferably not greater than 0.93.

In the tire 2, an outer diameter RF of the filament 46 is greater than or equal to 0.41 mm and not greater than 0.43 mm. When the outer diameter RF is set to be greater than or equal to 0.41 mm, the belt ply 38 has an appropriate stiffness. The belt ply 38 contributes to the cut/concussion resistance. When the outer diameter RF is set to be not greater than 0.43 mm, the belt cord 42 can be compact. The belt cord 42 contributes to reduction in the volume of the topping rubber 44 included in the belt ply 38.

In the tire 2, the length LS of the minor axis AS is preferably less than or equal to 1.03 mm. When the length LS is set to be less than or equal to 1.03 mm, the belt cords 42 contribute to reduction in the volume of the topping rubber 44. In the tire 2, the belt ply 38 does not contain a larger amount of the topping rubber 44 than is needed, and therefore, influence of the topping rubber 44 on the rolling resistance is reduced. In this viewpoint, the length LS is more preferably less than or equal to 0.98 mm, and more preferably less than or equal to 0.95 mm. As described above, in the present invention, it is assumed that the first filament 46a and the third filament 46c disposed along the minor axis AS are in contact with each other. Therefore, the sum of the outer diameter of the first filament 46a and the outer diameter of the third filament 46c is a preferable lower limit for the length LS of the minor axis AS. In the viewpoint of obtaining the belt cord 42 having a sufficient stiffness, the length LS is more preferably not less than 0.83 mm.

In the tire 2, the length LL of the major axis AL is preferably greater than or equal to 1.05 mm and preferably not greater than 1.30 mm. When the length LL is set to be greater than or equal to 1.05 mm, the belt cords 42 contribute to reduction in the volume of the topping rubber 44. In the tire 2, the belt ply 38 does not contain a larger amount of the topping rubber 44 than is needed, and therefore, influence of the topping rubber 44 on the rolling resistance is reduced. In this viewpoint, the length LL is more preferably greater than or equal to 1.08 mm. When the length LL is set to be not greater than 1.30 mm, distortion occurring between adjacent belt cords 42 in the belt ply 38 is appropriately inhibited. The energy loss is inhibited, and therefore, the rolling resistance of the tire 2 is appropriately maintained. In addition, the inhibition of such a distortion also contributes to the cut/concussion resistance. In this viewpoint, the length LL is more preferably not greater than 1.20 mm.

In FIG. 2, a double-headed arrow ta indicates a thickness of the belt ply 38. A double-headed arrow t indicates a thickness of the topping rubber 44 layered over the belt cords 42. The thickness t is obtained by measuring a length from an outer surface of the belt ply 38 to an outer surface of the belt cord 42 along the minor axis AS of the belt cord 42. The thickness ta of the belt ply 38 is represented using the length LS of the minor axis AS and the thickness t of the topping rubber 44, as the sum (LS + 2 $\times$ t) of the length LS, the thickness t of the topping rubber 44 on one side of the belt cord 42, and the thickness t of the topping rubber 44 on the other side thereof.

In the tire 2, the thickness ta of the belt ply 38 is greater than or equal to 1.30 mm and not greater than 1.55 mm. When the thickness ta is set to be greater than or equal to 1.30 mm, the topping rubber 44 is sufficiently assured in the belt ply 38. The belt ply 38 has an appropriate stiffness, and therefore, the cut/concussion resistance of the tire 2 is appropriately maintained. In this viewpoint, the thickness ta is preferably greater than or equal to 1.34 mm. When the thickness ta is set to be not greater than 1.55 mm, the amount of the topping rubber 44 included in the belt ply 38 is appropriately maintained. In the tire 2, influence of the topping rubber 44 on the rolling resistance is inhibited. In this viewpoint, the thickness ta is preferably not greater than 1.51 mm.

In the tire 2, the thickness t of the topping rubber 44 is greater than or equal to 0.20 mm and not greater than 0.30 mm. When the thickness t is set to be greater than or equal to 0.20 mm, the topping rubber 44 is sufficiently assured between the belt plies 38 which are layered in the radial direction. The entirety of the belt 22 has an appropriate stiffness, and therefore, the cut/concussion resistance of the tire 2 is appropriately maintained. In this viewpoint, the thickness t is preferably greater than or equal to 0.22 mm. When the thickness t is set to be not greater than 0.30 mm, the belt ply 38 does not contain a larger amount of the topping rubber 44 than is needed, and therefore, influence of the topping rubber 44 on the rolling resistance is reduced. In this viewpoint, the thickness t is preferably not greater than 0.28 mm.

In the tire 2, the ratio of the thickness ta of the belt ply 38 to the outer diameter RF of the filament 46 is preferably less than or equal to 3.5. When the ratio is set to be less than or equal to 3.5, the volume of the topping rubber 44 included in the belt ply 38 is appropriately maintained. In the tire 2, influence of the belt ply 38 on the rolling resistance is effectively reduced. In this viewpoint, the ratio is more preferably less than or equal to 3.4. In the tire 2, the ratio is preferably not less than 3.1. When the ratio is set to be not less than 3.1, the volume of the topping rubber 44 included in the belt ply 38 is appropriately maintained. In the tire 2, the belt ply 38 has an appropriate stiffness, and therefore, the cut/concussion resistance is excellent. In this viewpoint, the ratio is more preferably not less than 3.2.

In the present invention, unless otherwise specified, the dimensions and angles of the components of the tire 2 are measured in a state where the tire 2 is mounted on a normal rim and inflated with air to a normal internal pressure. During the measurement, no load is applied to the tire 2. The dimensions and angles of the tire 2 for a passenger car are measured at an internal pressure of 180 kPa.

In the description herein, "normal rim" means a rim that is specified by the standard with which the tire 2 complies. A normal rim may be a "standard rim" in the JATMA standards, a "design rim" in the TRA standards, or a "measuring rim" in the ETRTO standards.

In the description herein, "normal internal pressure" means an internal pressure that is specified by the standard with which the tire 2 complies. A normal internal pressure may be a "maximum air pressure" in the JATMA standards, a "maximum value" recited in the "TIRE LOAD LIMITS AT VARIOUS COLD INFLATION PRESSURES" in the TRA standards, or an "inflation pressure" in the ETRTO standards.

In the description herein, "normal load" means a load that is specified by the standard with which the tire 2 complies. A normal load may be a "maximum load capacity" in the JATMA standards, a "maximum value" recited in the "TIRE LOAD LIMITS AT VARIOUS COLD INFLATION PRESSURES" in the TRA standards, and a "load capacity" in the ETRTO standards.

EXAMPLES

Hereinafter, effects of the present invention will become apparent according to examples. However, the present invention should not be restrictively construed based on the description of examples.

[Example 1]

A tire shown in FIGS. 1 and 2 was produced. The tire had a size of 11R22.5 16PR. Specifications of example 1 are as indicated in Table 1 below. In example 1, a belt cord having the filament arrangement shown in FIG. 3(a) was employed. This is indicated by "a" in a cell for "Configuration" in Table 1. The density of the belt cords in the belt ply was 25 ends/5 cm.

7

[Examples 2-6 and Comparative examples 1 and 2]

Tires of examples 2-6 and comparative examples 1 and 2 were obtained in a manner similar to that of example 1, except that the arrangement of filaments in the belt cord was adjusted so that the ratio (LS/LL) of the length LS of the minor axis AS to the length LL of the major axis AL in a cross-section of the belt cord was as indicated in Table 1 below. The belt cords of example 2 and comparative example 1 had the filament arrangement shown in FIG. 3(c). This is indicated by "c" in the cell for "Configuration" in Table 1. The belt cord of example 3 had the filament arrangement shown in FIG. 3(b). This is indicated by "b" in the cell for "Configuration" in Table 1. The belt cords of examples 4 to 6 and comparative example 2 had the filament arrangement shown in FIG. 3(a), as in example 1.

[Comparative example 3]

A tire of comparative example 3 was obtained in a manner similar to that of example 1, except that a different belt cord was employed. In comparative example 3, the belt cord was a twisted string which was obtained by twisting four filaments, and had a round cross-section. The belt cord had an outer diameter of 1.00 mm. Each filament was the same as in example 1. Therefore, the filament had an outer diameter RF of 0.415 mm. In a cross-section of the cord of comparative example 3, the first and third filaments were each in contact with the second and fourth filaments, as in the belt cord of example 1.

[Comparative example 4]

A tire of comparative example 4 was obtained in a manner similar to that of example 1, except that a different belt cord was employed. In comparative example 4, the belt cord was a twisted string which was obtained by twisting four filaments, and which had an elliptical cross-section, and in which the filaments were not in contact with each other. The length LL of the major axis AL of the cross-section of the belt cord was 1.20 mm. The length LS of the minor axis AS of the cross-section was 0.95 mm. Therefore, the ratio (LS/LL) of the length LS to the length LL was 0.791. Each filament was the same as in example 1. Therefore, the filament had an outer diameter RF of 0.415 mm.

[Examples 7 to 10]

Tires of examples 7 to 10 were each obtained in a manner similar to that of example 1, except that a different topping rubber was used in the belt ply, and the breaking energy E of the topping rubber was as indicated in Table 2 below.

[Examples 11 to 14]

Tires of examples 11 to 14 were each obtained in a manner similar to that of example 1, except that the ratio (BW/TW) of a half (BW) of the width of the belt to a half (TW) of the width of the tread surface was as indicated in Table 3 below.

[Examples 15 to 18]

Tires of examples 15 to 18 were each obtained in a manner similar to that of example 1, except that the filament had a different outer diameter RF, and the length LS of the minor axis AS and the length LL of the major axis AL were as indicated in Table 4 below.

[Examples 19 to 22]

Tires of examples 19 to 22 were each obtained in a manner similar to that of example 1, except that the thickness t of the topping rubber was as indicated in Table 5 below.

[Rolling Resistance Coefficient]

A rolling resistance coefficient (RRC) was measured using a rolling resistance testing machine under the following measurement conditions:

Rim used: 8.25 × 22.5
Internal pressure: 800 kPa
Load: 26.72 kN

Speed: 80 km/h

The results are indicated as indexes in Tables 1 to 5 below. The greater the value of the index is, the lower the rolling resistance is and the more preferable the result is.

[Cut/concussion Resistance]

The cut/concussion resistance (CCR) was evaluated by a plunger test. The plunger test was conducted in compliance with JIS-D4230 as follows. Initially, a tire was mounted on a rim (size: 8.25 × 22.5), and inflated with air to an internal pressure of 800 kPa. A plunger (plunger diameter: 38 mm) was pressed against the tread surface and moved radially inward from the outer side until the tire was broken. A force (hereinafter, referred to as a "pushing force") which was needed to push the plunger into the tire and the moving distance of the plunger were measured until the tire was broken. The strength of a tire was evaluated on the basis of a pushing force and a moving distance immediately before the tire was broken. The results are indicated as indexes in Tables 1 to 5 below. The greater the value of the index is, the higher the strength of a tire is and the more preferable the result is. In other words, the greater the value of the index is, the better the cut/concussion resistance is.

[Table 1]

Table 1 Evaluation results

|  | Comp. Ex.1 | Ex.2 | Ex.3 | Ex.4 | Ex.1 | Ex.5 | Ex.6 | Comp. ex.2 |
|---|---|---|---|---|---|---|---|---|
| LS/LL [-] | 0.638 | 0.692 | 0.727 | 0.764 | 0.809 | 0.856 | 0.905 | 0.956 |
| LS [mm] | 0.830 | 0.830 | 0.830 | 0.857 | 0.891 | 0.921 | 0.951 | 0.981 |
| LL [mm] | 1.30 | 1.20 | 1.14 | 1.12 | 1.10 | 1.08 | 1. 05 | 1.03 |
| RF [mm] | 0.415 | 0.415 | 0.415 | 0.415 | 0.415 | 0.415 | 0.415 | 0.415 |
| Configuration | c | C | b | a | a | a | a | a |
| t [mm] | 0.250 | 0.250 | 0.250 | 0.250 | 0.250 | 0.250 | 0.250 | 0.250 |
| ta [mm] | 1.330 | 1.330 | 1.330 | 1.357 | 1.391 | 1.421 | 1.451 | 1.481 |
| E [MPa·%] | 5500 | 5500 | 5500 | 5500 | 5500 | 5500 | 5500 | 5500 |
| BW/TW [-] | 0.80 | 0.80 | 0.80 | 0.80 | 0.80 | 0.80 | 0.80 | 0.80 |
| RRC | 100 | 100 | 100 | 100 | 100 | 100 | 98 | 90 |
| CCR | 90 | 98 | 100 | 100 | 100 | 100 | 100 | 100 |

[Table 2]

Table 2 Evaluation results

|  | Comp. ex.3 | Comp. ex.4 | Ex.7 | Ex.8 | Ex.9 | Ex.10 |
|---|---|---|---|---|---|---|
| LS/LL [-] | 1.00 | 0.791 | 0.809 | 0.809 | 0.809 | 0.809 |
| LS [mm] | 1.00 | 0.950 | 0.891 | 0.891 | 0.891 | 0.891 |
| LL [mm] | 1.00 | 1.20 | 1.10 | 1.10 | 1.10 | 1.10 |
| RF [mm] | 0.415 | 0.415 | 0.415 | 0.415 | 0.415 | 0.415 |
| Configuration | - | - | a | a | a | a |
| t [mm] | 0.250 | 0.250 | 0.250 | 0.250 | 0.250 | 0.250 |
| ta [mm] | 1.500 | 1.450 | 1.391 | 1.391 | 1.391 | 1.391 |

(continued)

|  | Comp. ex.3 | Comp. ex.4 | Ex.7 | Ex.8 | Ex.9 | Ex.10 |
|---|---|---|---|---|---|---|
| E [MPa·%] | 5500 | 5500 | 3900 | 4500 | 6500 | 7100 |
| BW/TW [-] | 0.80 | 0.80 | 0.80 | 0.80 | 0.80 | 0.80 |
| RRC | 85 | 90 | 104 | 102 | 97 | 92 |
| CCR | 100 | 90 | 92 | 97 | 102 | 104 |

[Table 3]

Table 3 Evaluation results

|  | Ex.11 | Ex.12 | Ex.13 | Ex.14 |
|---|---|---|---|---|
| LS/LL [-] | 0.809 | 0.809 | 0.809 | 0.809 |
| LS [mm] | 0.891 | 0.891 | 0.891 | 0.891 |
| LL [mm] | 1.10 | 1.10 | 1.10 | 1.10 |
| RF [mm] | 0.415 | 0.415 | 0.415 | 0.415 |
| Configuration | a | a | a | a |
| t [mm] | 0.250 | 0.250 | 0.250 | 0.250 |
| ta [mm] | 1.391 | 1.391 | 1.391 | 1.391 |
| E [MPa·%] | 5500 | 5500 | 5500 | 5500 |
| BW/TW [-] | 0.70 | 0.78 | 0.93 | 0.97 |
| RRC | 92 | 98 | 102 | 94 |
| CCR | 95 | 99 | 101 | 102 |

[Table 4]

Table 4 Evaluation results

|  | Ex.15* | Ex.16 | Ex.17 | Ex.18 |
|---|---|---|---|---|
| LS/LL [-] | 0.809 | 0.809 | 0.809 | 0.809 |
| LS [mm] | 0.858 | 0.880 | 0.912 | 0.945 |
| LL [mm] | 1.06 | 1.09 | 1.13 | 1.17 |
| RF [mm] | 0.400 | 0.410 | 0.425 | 0.440 |
| Configuration | a | a | a | a |
| t [mm] | 0.250 | 0.250 | 0.250 | 0.250 |
| ta [mm] | 1.358 | 1.380 | 1.412 | 1.445 |
| E [MPa·%] | 5500 | 5500 | 5500 | 5500 |
| BW/TW [-] | 0.80 | 0.80 | 0.80 | 0.80 |
| RRC | 105 | 102 | 98 | 94 |
| CCR | 92 | 98 | 102 | 105 |

[Table 5]

Table 5 Evaluation results

|  | Ex.19* | Ex.20 | Ex.21 | Ex.22 |
|---|---|---|---|---|
| LS/LL [-] | 0.809 | 0.809 | 0.809 | 0.809 |
| LS [mm] | 0.891 | 0.891 | 0.891 | 0.891 |
| LL [mm] | 1.10 | 1.10 | 1.10 | 1.10 |
| RF [mm] | 0.415 | 0.415 | 0.415 | 0.415 |
| Configuration | a | a | a | a |
| t [mm] | 0.200 | 0.225 | 0.275 | 0.300 |
| ta [mm] | 1.291 | 1.341 | 1.441 | 1.491 |
| E [MPa·%] | 5500 | 5500 | 5500 | 5500 |
| BW/TW [-] | 0.80 | 0.80 | 0.80 | 0.80 |
| RRC | 107 | 105 | 95 | 92 |
| CCR | 92 | 96 | 102 | 105 |
| *not according to claim 1 | | | | |

The Examples 15 and 19 are not according to claim 1.

As shown in Tables 1 to 5, the tires of examples are evaluated more highly as compared to the tires of comparative examples. The evaluation results clearly indicate that the present invention is superior.

The above-described technique pertaining to a belt ply is applicable to a variety of tires.

The foregoing description is in all aspects illustrative, and various modifications can be devised within the scope of protection defined by the following claims.

**Claims**

**1.** A pneumatic tire (2) comprising:

a tread (4); and
a belt (22), wherein
the belt (22) is disposed radially inward of the tread (4), the belt (22) includes a plurality of belt plies (38) layered in a radial direction,
each of the belt plies (38) includes multiple steel belt cords (42) and a topping rubber,
the belt cords (42) are covered by the topping rubber (44),
each of the belt cords (42) includes a twisted string obtained by twisting together four filaments (46),
the belt cord (42) has an elliptical cross-section,
on the elliptical cross-section,
a minor axis (AS) of the cross-section extends in a thickness direction of the belt ply (38),
a ratio of a length (LS) of the minor axis (AS) to a length (LL) of a major axis (AL) of the cross-section is greater than or equal to 0.67 and not greater than 0.94,
the four filaments (46) are a first filament (46a), a second filament (46b), a third filament (46c), and a fourth filament (46d) arranged in clockwise order, respectively,
the first filament (46a) and the third filament (46c) are disposed along the minor axis (AS), and
the first filament (46a) is in contact with the second filament (46b) or the fourth filament (46d), the third filament (46c) is in contact with the second filament (46b) or the fourth filament (46d), the first filament (46a) and the third filament (46c) are each in contact with the second filament (46b) and the fourth filament (46d), or the first filament (46a) is in contact with the third filament (46c),
**characterized in that**

a thickness (t) of the topping rubber 44 that corresponds to a length from an outer surface of the belt ply (38) to an outer surface of the belt cord (42) along the minor axis (AS) of the belt cord (42) is greater than or equal to 0.20 mm and not greater than 0.30 mm and a thickness (ta) of each belt ply (38) is greater than or equal to 1.30 mm and not greater than 1.55 mm, and

an outer diameter (RF) of each filament (46) is greater than or equal to 0.41 mm and not greater than 0.43 mm.

2. The pneumatic tire (2) according to claim 1, wherein the topping rubber (44) has a breaking energy of higher than or equal to 4000 MPa ·% and not higher than 7000 MPa ·%.

3. The pneumatic tire (2) according to claim 1, wherein a ratio of a width (BW) of the belt (22) to a width (TW) of the tread (4) is greater than or equal to 0.75 and not greater than 0.95.


**Patentansprüche**

1. Luftreifen (2), umfassend:

eine Lauffläche (4); und
einen Gürtel (22), wobei
der Gürtel (22) radial innen von der Lauffläche (4) angeordnet ist, der Gürtel (22) eine Vielzahl von Gürtellagen (38) umfasst, die in einer radialen Richtung geschichtet sind,
jede der Gürtellagen (38) mehrere Stahlgürtelkorde (42) und einen Gummierungskautschuk umfasst,
die Gürtelkorde (42) mit dem Gummierungskautschuk (44) bedeckt sind,
jeder der Gürtelkorde (42) eine verdrillte Schnur enthält, die durch miteinander Verdrillen von vier Filamenten (46) erhalten ist,
der Gürtelkord (42) einen elliptischen Querschnitt aufweist,
auf dem elliptischen Querschnitt,
eine Nebenachse (AS) des Querschnitts in Richtung der Dicke der Gürtellage (38) verläuft,
ein Verhältnis einer Länge (LS) der Nebenachse (AS) zu einer Länge (LL) einer Hauptachse (AL) des Querschnitts größer als oder gleich 0,67 und nicht größer als 0,94 ist,
die vier Filamente (46) ein erstes Filament (46a), ein zweites Filament (46b), ein drittes Filament (46c) und ein viertes Filament (46d) sind, die jeweils im Uhrzeigersinn angeordnet sind,
das erste Filament (46a) und das dritte Filament (46c) entlang der Nebenachse (AS) angeordnet sind, und
das erste Filament (46a) in Kontakt mit dem zweiten Filament (46b) oder dem vierten Filament (46d) steht, das dritte Filament (46c) in Kontakt mit dem zweiten Filament (46b) oder dem vierten Filament (46d) steht, das erste Filament (46a) und das dritte Filament (46c) jeweils in Kontakt mit dem zweiten Filament (46b) und dem vierten Filament (46d) stehen, oder das erste Filament (46a) in Kontakt mit dem dritten Filament (46c) steht,
**dadurch gekennzeichnet, dass**
eine Dicke (t) des Gummierungskautschuks (44), die einer Länge von einer Außenfläche der Gürtellage (38) zu einer Außenfläche des Gürtelkords (42) entlang der Nebenachse (AS) des Gürtelkords (42) entspricht, größer als oder gleich 0,20 mm und nicht größer als 0,30 mm ist und eine Dicke (ta) jeder Gürtellage (38) größer oder gleich 1,30 mm und nicht größer als 1,55 mm ist, und
ein Außendurchmesser (RF) jedes Filaments (46) größer als oder gleich 0,41 mm und nicht größer als 0,43 mm ist.

2. Luftreifen (2) nach Anspruch 1, wobei der Gummierungskautschuk (44) eine Bruchenergie von mehr als oder gleich 4000 MPa·% und nicht mehr als 7000 MPa·% aufweist.

3. Luftreifen (2) nach Anspruch 1, wobei ein Verhältnis einer Breite (BW) des Gürtels (22) zu einer Breite (TW) der Lauffläche (4) größer als oder gleich 0,75 und nicht größer als 0,95 ist.


**Revendications**

1. Bandage pneumatique (2) comprenant :

une bande de roulement (4) ; et
une ceinture (22), dans lequel

la ceinture (22) est disposée radialement à l'intérieur de la bande de roulement (4), la ceinture (22) inclut une pluralité de nappes de ceinture (18) disposées en couches dans une direction radiale,

chacune des nappes de ceinture (38) inclut une multiplicité de câblés de ceinture en acier (42) et un caoutchouc d'enrobage,

les câblés de ceinture (42) sont couverts par le caoutchouc d'enrobage (44),

chacun des câblés de ceinture (42) inclut un brin torsadé obtenu en torsadant ensemble quatre filaments (46),

le câblé de ceinture (42) a une section transversale elliptique,

sur ladite section transversale elliptique,

un petit axe (AS) de la section transversale s'étend dans une direction de l'épaisseur de la nappe de ceinture (38),

un rapport d'une longueur (LS) du petit axe (AS) sur une longueur (LL) d'un grand axe (AL) de la section transversale est supérieur ou égal à 0,67 et n'est pas supérieur à 0,94,

les quatre filaments (46) sont constitués d'un premier filament (46a), d'un deuxième filament (46b), d'un troisième filament (46c), et d'un quatrième filament (46d) agencés dans l'ordre dans le sens des aiguilles d'une montre, respectivement,

le premier filament (46a) et le troisième filament (46c) sont disposés le long du petit axe (AS), et

le premier filament (46a) est en contact avec le deuxième filament (46b) ou le quatrième filament (46b), le troisième filament (46c) est en contact avec le deuxième filament (46b) ou le quatrième filament (46b), le premier filament (46a) et le troisième filament (46c) sont chacun en contact avec le deuxième filament (46b) et le quatrième filament (46b), ou le premier filament (46b) est en contact avec le troisième filament (46c),

**caractérisé en ce que**

une épaisseur (t) du caoutchouc d'enrobage (44) qui correspond à une longueur depuis une surface extérieure de la nappe de ceinture (38) jusqu'à une surface extérieure du câblé de ceinture (42) le long du petit axe (AS) du câblé de ceinture (42) est supérieure ou égale à 0,20 mm et n'est pas supérieure à 0,30 mm, et une épaisseur (ta) de chaque nappe de ceinture (38) est supérieure ou égale à 1,30 mm et n'est pas supérieure à 1,55 mm, et un diamètre extérieur (RF) de chaque filament (46) est supérieur ou égal à 0,41 mm et n'est pas supérieur à 0,43 mm.

2. Bandage pneumatique (2) selon la revendication 1, dans lequel le caoutchouc d'enrobage (44) possède une énergie à la rupture supérieure ou égale à 4000 MPa % et qui n'est pas supérieure à 7000 MPa %.

3. Bandage pneumatique (2) selon la revendication 1, dans lequel un rapport d'une largeur (BW) de la ceinture (22) sur une largeur (TW) de la bande de roulement (4) est supérieur ou égal à 0,75 et n'est pas supérieur à 0,95.

*FIG. 1*

FIG. 2

# FIG. 3

(a)

(b)

(c)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3096404 A
- JP S61081802 A
- JP H07189144 B
- JP HLL217778 B